(19) Europäisches Patentamt
European Patent Office
Office européen des brevets

(11) EP 0 277 834 B1

(12) **EUROPEAN PATENT SPECIFICATION**

(45) Date of publication and mention of the grant of the patent:
**13.05.1998 Bulletin 1998/20**

(51) Int. Cl.[6]: **B01D 71/68**, B01D 71/82, B01D 69/12, C02F 1/44

(21) Application number: **88300949.0**

(22) Date of filing: **04.02.1988**

(54) **Process for the preparation of stable reverse-osmosis membranes from sulfonated polyarylethers**

Verfahren zur Herstellung von stabilen Umkehrosmose-Membranen aus sulfonierten Polyaryläthern

Procédé pour la préparation de membranes stables en poly(éthers d'arylène) sulfonés pour l'osmose inverse

(84) Designated Contracting States:
**AT BE CH DE ES FR GB IT LI NL SE**

(30) Priority: **04.02.1987 US 10865**

(43) Date of publication of application:
**10.08.1988 Bulletin 1988/32**

(73) Proprietor: **HYDRANAUTICS**
**Goleta California 93117 (US)**

(72) Inventors:
- **Tomaschke, John Edward**
  **San Diego California 92126 (US)**
- **Testa, Anthony Joseph**
  **Westwood Massachusetts 02090 (US)**
- **Vouros, James George**
  **Boston Massachusetts 02113 (US)**

(74) Representative:
**Jones, Helen Marjorie Meredith et al**
**Gill Jennings & Every,**
**Broadgate House,**
**7 Eldon Street**
**London EC2M 7LH (GB)**

(56) References cited:

| | |
|---|---|
| **EP-A- 254 334** | **EP-A- 0 112 724** |
| **EP-A- 0 165 077** | **EP-A- 0 202 849** |
| **EP-A- 0 237 251** | **FR-A- 2 252 862** |
| **GB-A- 1 495 887** | **JP-A-61 222 503** |

- **JOURNAL OF APPLIED POLYMER SCIENCE, vol. 29, 1984, pages 4029-4035, J. Wiley & Sons, Inc., New York, US; R.Y.M. HUANG et al.: "Synthesis and transport properties of thin film composite membranes. II. Preparation of sulfonated poly(phenylene oxide) thin film composite membranes for the purification of alberta tar sands waste waters"**
- **Ullmanns Enzyklopädie der technischen Chemie, 4. Auflage, Bd.16, 1978,Verlag Chemie, Weinheim, DE, S.283-285**
- **Kesting R.E., "Synthetic Polymeric membranes",1985, 2nd ed.,p.205, J.Wiley and Sons, N.Y., USA**
- **Industrial and Engineering Chemistry Product Research and Development, Vol.8, N 1,March 1969,p.2-11, Hansen C.M., "The universality of the solubility parameter"**

Remarks:
The file contains technical information submitted after the application was filed and not included in this specification

EP 0 277 834 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Xerox (UK) Business Services
2.16.3/3.4

## Description

FIELD OF THE INVENTION. The present invention relates to a novel process for the preparation of composite sulfonated poly(arylether) membranes for reverse osmosis ("RO").

DESCRIPTION OF THE PRIOR ART. The present commercially available membranes for water desalination by reverse osmosis are derived from two basic classes of polymers: cellulosic (predominantly cellulose acetates) and the newer generation condensation products consisting of polyamides, polyamidohydrazides, polyureas and polyetherureas. The cellulosic membranes are susceptible to microbiological attack, compaction at higher temperatures and pressures, and are limited to a relatively narrow feed pH range. These membranes do, however, possess fairly good resistance to low levels of chlorine, a popular disinfectant and cleaning chemical used in water desalination and other separation processes. The second group of polymers (which are suitable for ultrafiltration as well as RO) in general exhibit improved transport properties at given applied pressures and stability over a wider range of pH compared to the cellulosic membranes. Unfortunately, all of these membranes made from the newer generation of polymers suffer from poor resistance to continual exposure to oxidizing agents such as chlorine in a RO application. This "tradeoff" in sensitivities results in economically disadvantageous chlorine removal in many common feed streams or loss of membrane permselectivity due to oxidative degradation. Thus, this kind of sensitivity limits or even prevents their use in potable water applications and especially food and beverage, medical, biochemical, and pharmaceutical applications where chlorination and other similar oxidative cleaners or sterilants are commonly employed.

In recent years polysulfone type polymers have been extensively used in the manufacture of ultrafiltration membranes for use in many applications because of excellent hydrolytic stability and high temperature properties. The polysulfone polymers that are commercially available today, UDEL® polysulfone manufactued by Union Carbide Corp. and Victrex® polyethersulfone manufactured by ICI, also possess acceptable chlorine resistance when exposed periodically during cleaning. Therefore, these polysulfone type polymers are extensively used for membrane applications in the dairy and food processing areas that require daily sanitizations with chlorine and high temperature membrane cleaning regimens of 1% caustic and 1% phosphoric acid. Polysulfone type membranes have also found extensive use in pharmaceutical and biotechnology application areas and perform very well under most circumstances.

In recent years, sulfonated polyarylethers, and particularly sulfonated polyarylether sulfones have been examined for membrane separation applications due to their outstanding chemical and thermal stability. In addition to demonstrating good RO membrane flux and salt rejections at pressures greater than 300psig(2.07MPa gauge), these membranes have demonstrated the ability to operate at continuous chlorine exposure levels and pH extremes that would destroy both of the previously mentioned classes of polymer membranes. Thus the chlorine tolerance and hydrolytic stability of the sulfonated polyarylethers would, at first blush, appear to make them particularly well suited for desalination of a wide range of aggressive feed streams represented by such conditions ranging from natural brackish waters, industrial effluents, sewage effluents, mining waters, agricultural run-off, etc. and many applications other than water desalination and water recovery mentioned previously.

The problem with these membranes has been their inability to achieve commercially attractive fluxes and salt rejections reproducibly at economical applied pressures. Acceptable performance for brackish water (low pressure RO) desalination would typically be: at least 15 GFD (gallons/$ft^2$-day)(610 l/$m^2$ day) water flux and 95% or better salt rejection (5% or-less salt passage) at 200psig(1.38MPa) net driving pressure (NDP) or alternatively, an equitable tradeoff in these properties. Consistent with the principles of reverse osmosis, higher applied pressures will give higher flux and salt rejection, but at a penalty of added power cost for the extra pressure. It is therefore desirable to develop membranes which produce adequate flux and salt rejections at lower applied pressures.

The prior art involving sulfonated polyarylether membranes reveals that in order to obtain the desired transport properties on brackish (2000-5000 ppm NaCl) feeds of 15 GFD(610 $lm^{-2}d^{-1}$) or more flux and 95% or better salt rejection, applied pressures of 300-600 psig (2.07-4.14MPa) or even more had to be used. The predominant membrane types developed were asymmetric, and consisted of thick (1-20mil)(25-510μm) anisotropic structures in which the permselectivity occurs at the thin dense film top side of this structure. The thin top film is integral with and supported by a progressively more porous understructure. Better results were found with thin film composite membranes in which selected laboratory samples developed by Graefe, et al (Office of Water Research and Technology, Report No. 2001-20) achieved low pressure goal performance at 250psig (1.72MPa)(32GFD)(1300 $lm^{-2}d^{-1}$) flux and 94.5% salt rejection). This latter membrane example consisted of a thin film laminate prepared by brush coating a solution of sulfonated polysulfone onto a porous polysulfone substrate which was pretreated with aqueous lactic acid. The purpose for the latter solution was claimed to prevent intrusion of the sulfonated polysulfone solution into the pores of the porous substrate. This thin film composite membrane while demonstrating potential, suffered from an awkward porous substrate pretreatment step and lack of performance reproductibility and never reached commercialization.

One such thin film composite membrane which was carried further in its development was the hollow fiber composite system developed by Schiffer, et al. This membrane was prepared by coating an alcoholic solution of a highly sulfonated polysulfone (free acid form) onto a porous hollow-fiber polysulfone substrate. The thin film was claimed to have

been crosslinked via the thermal treatment applied after solution deposition, though no proof of this was actually given. Performance was modest - at 6 GFD (240lm$^{-2}$d$^{-1}$) flux and up to 95% salt rejection on a 3500 ppm NaCl feed at 400psig (2.76 MPa) applied pressure. Problems with this membrane included inherent fragility of the coated fibers and ultimately inconsistent performance results on test in the full scale element mode.

The vast majority of prior art sulfonated polyarylether membranes has consisted of either (impractical) laboratory scale, thick dense films or asymmetric structures. These types of structures have been incapable of providing at least 15 GFD (610lm$^{-2}$d$^{-1}$) flux with 95% salt rejection at economical applies pressure (under 400 psig (2.76 MPa)) as required for RO applications. As a result, some researchers investigated thin film composite membrane designs, since this approach if carried out optimally yields maximum fluxes in conjunction with good salt rejections. This is consistent not only with theory but also with other known membrane structures in operation today. The limitations with prior art thin film composites rested with the techniques of fabrication and the polymer choices used.

In EP-A-0165077 composite sulphonate polyaryl ether RO and UF membranes are prepared by a process in which a solution of a polysulfone is formed in a solvent system, for instance 99% ethyleneglycol monomethyl ether (2-methoxyethanol) 1% dimethylformamide, the solution is applied to a process polysulfone substrate and the solvent is evaporated.

## SUMMARY OF THE INVENTION

In contrast to the results of the prior art, it has now been discovered that superior sulfonated polyarylether permselective membranes can be produced by deposition of particular solutions of these polymers directly onto porous polymer substrates. This novel process is optimally carried out without the need for precoating the porous support and crosslinking the nascent thin film or coating. It has further been found that many heretofore unexplored combinations of thin film barrier polymers and porous support polymers are possible, in fact - judicious combinations have proven optimal in the development of these thin film composite permselective membranes.

In the invention there is provided a new process for making a composite reverse osmosis membrane comprising a porous polymeric membrane substrate, which process comprises (a) forming a solution of sulfonated polyarylether polymer in a solvent system which is polar, volatile, of low enough surface tension to wet the porous substrate, and though optionally capable of swelling the porous substrate, is not able to dissolve it, (b) uniformly applying said solution of the sulfonated polyarylether to at least one surface of the porous substrate and (c) removing said solvent from the solution to form a film of the sulfonated polyarylether adherently attached to the porous substrate, characterised in that the solvent system comprises at least 20% to 100% formic acid with any remainder being selected from:

(a) water and optionally minor amounts of alkali metal salts, and

(b) a solvent selected from the group consisting of formamide, alcohols, alkylene diols and triols and alkylene glycol alkyl ethers and in that the solution of sulphonated polyaryl ether is applied in an amount in the range 0.1 to 1g polymer per m$^2$ substrate.

More specifically, thin film composite reverse osmosis membranes are prepared from sulfonated polyarylethers with an ion exchange capacity (IEC) of 0.2 to 2.9 meq/g, preferably 0.2 to 2.0 meq/g, by a convenient one-step solution deposition onto porous polymer substrates. Polar solvents of medium to strong hydrogen-bonding ability, reasonable volatility, and low enough surface tension to wet the porous susbtrates are required. The optional addition of alkali metal salts, particularly lithium salts, to the coating formulation has normally been shown to dramatically increase water permeability of the resultant membranes. The deposition of said solutions of sulfonated polyarylethers (SP's) in the amount of 10-100 mg SP/ft$^2$ (about 0.1 to 1 g/m$^2$) of porous substrate followed by solvent evaporation yields composite membranes with excellent perselectivity, toughness, and chemical resistance. These membranes are suitable for applications ranging from higher pressure to low pressure reverse osmosis (RO) (e.g., sea water to brackish water applications) including desalination, food and beverage, pulp and paper, metal liquor, pharmaceutical, electronics, water softening, medical, RO pretreatment, and non-aqueous applications.

The process mentioned before thus basically comprises uniformly applying to a dry or wet porous polymeric membrane substrate a solution of a sulfonated polyarylether containing its sulfonic acid groups in the free acid form or salt form in a good solvent, or a mixture of liquids creating a good solvent, containing the requisite amount of a flux enhancing additive, then removing the bulk of the solvents by heating to yield a thin film composite membrane. The solvent system, either as a singular liquid or as a mixture of liquids, is substantially polar, reasonably volatile, of low enough surface tension to wet the dry porous substrate, and, though possibly capable of swelling the porous substrate polymer, is not able to dissolve it. The selection of an improved solvent system for the sulfonated polyarylethers is an important and novel aspect of this invention. Effective coating has been demonstrated with a variety of controlled liquid application methods commonly employed in the coating/converting industry. The resultant sulfonated polyarylether thin film, while not chemically reacted with the porous substrate polymer, is remarkably well adhered to it and yields a tough, permanent and adherent layer that consistently survives both the chemical and mechanical rigors of realistic test conditions. Reverse osmosis membranes prepared in this way exhibit excellent fluxes and salt rejections, with uniquely high resistance to chlorine and other harsh cleansers commonly used for membrane separation applications.

Unlike the dense salt rejecting layer needed for RO, with the low pressure RO membranes the sulfonated polyarylether coating must itself be sufficiently porous to allow control of the desired salt rejection

Although we do not wish to be bound to any theory expressed herein, it can be postulated that the RO membranes have a continuous film coating free of large pores to allow diffusion of water while rejecting salts Although direct proof of the correctness of this belief is lacking, it may be helpful in understanding the present invention to consider the RO-type membranes as true composite membranes with a continuous gel polymer film (barrier layer) at the surface of a porous membrane substrate

DETAILED DESCRIPTION

It has now been found that thin film composite membranes with superior flux and rejection properties can be fabricated by a solution deposition process utilizing sulfonated polyarylether polymers containing a specific range of sulfonation content together with selected solvent systems and porous polymeric substrates.

The polyarylethers useful in the practice of this invention are aromatic polymers lacking oxidatively unstable linkages in the main chain and of sufficient molecular weight for good film forming behavior. These belong to three different basic structural types as represented by the formulae below:

I 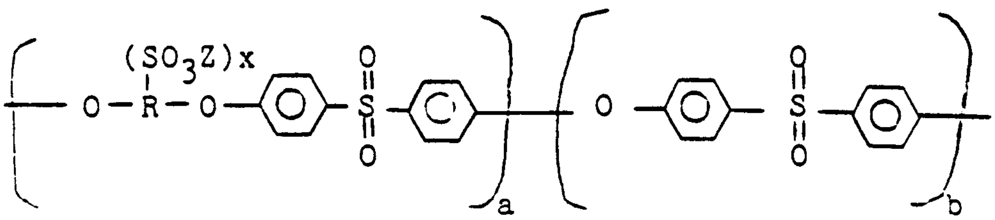

in which R is an aromatic radical chosen from the following:

-1 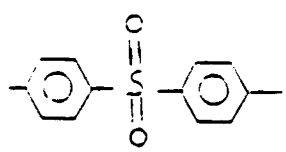 where a = 50-200 and b = 0

-2 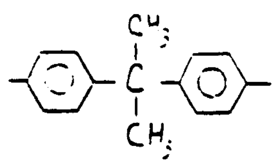 where a = 50-200 and b = 0

-3 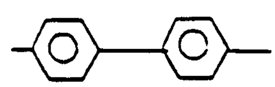 where a = 50-200 and b = 0

-4 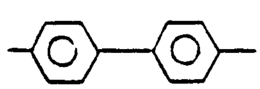 where b/a = .1-50

-5 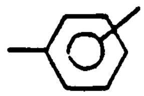 where b/a = 1-20

-6 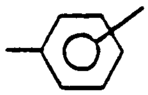 where a = 50-200 and b = 0

-7 Any combination of the above radicals and additionally those not shown above that are derived from commercially available dihydroxy aromatic monomers capable of reacting with a dihalodiphenyl sulfone monomer to form a polyarylether sulfone.

II 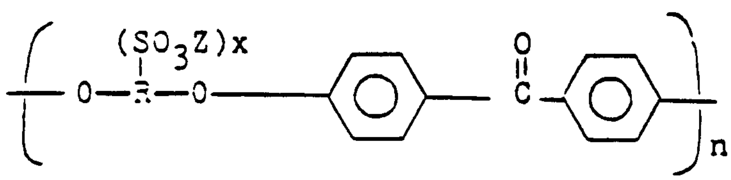 n = 50-200

in which R is an aromatic radical chosen from the following:

-1 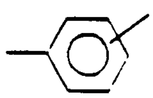 -2 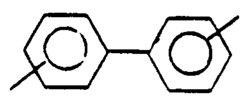 -3 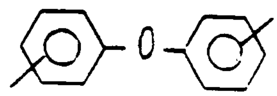

-4 Any combination of the above radicals and alternatively, those not shown above that are derived from commercially available dihydroxy aromatic monomers capable of reacting with a dihalodiphenyl ketone monomer to form a polyarylether ketone.

III 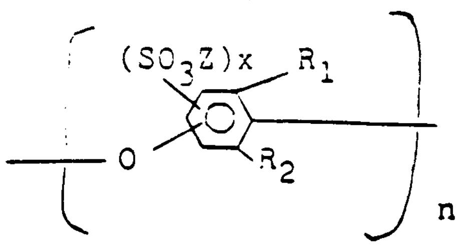 n = 50-800

in which $R_1$ and $R_2$ are hydrogen, or alkyl radicals, thus specifically:

-1 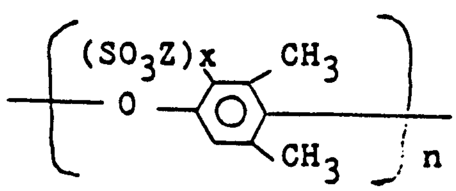 -2 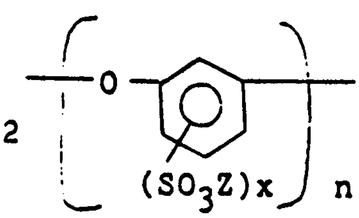

Particularly preferred polyarylethers are selected from

A) a sulfonated polyarylether sulfone of the formula:

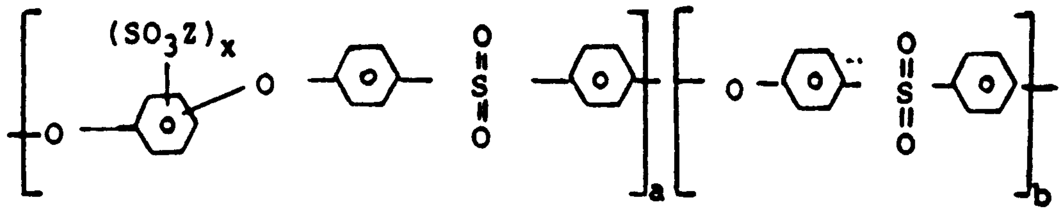

wherein Z is hydrogen, an alkali metal, or nitrogen containing species derived from ammmonia or amines, the b/a ratio is from 0 to 20 and x is an average number such as to give an ion exchange capacity for the sulfonated polymer of between 0.2 and 2.0 meq/g,

B) a sulfonated polyarylether sulfone of the formula:

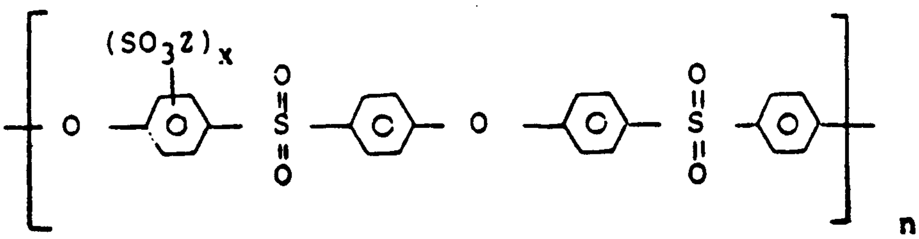

wherein Z is hydrogen, an alkali metal or nitrogen containing species derived from ammonia or amines and x is an average number such as to give an ion exchange capacity for the sulfonated polyarylether sulfone polymer of between 0.2 and 2.0 meq/g, and

C) a sulfonated polyarylether ketone of the formula:

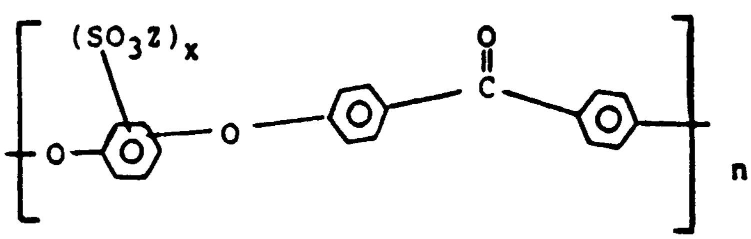

wherein Z is hydrogen, an alkali metal, or nitrogen containing species derived from ammonia or amines and x is an average number such as to give an ion exchange capacity for the sulfonated polyarylether ketone polymer of between 0.2 and 2.0 meq/g.

The number of units are such as to provide good film forming behaviour.

$SO_3Z$ refers to the sulfonic acid group which is introduced into the fully synthesized polymer by methods commonly practiced for aromatic polymer sulfonations. The position of this group, consistent with electophilic aromatic substitution, is predominantly ortho to the activating ether linkage for all polymer types shown. Z may be hydrogen in the case of free acid, an alkali metal salt, or a nitrogen containing salt derived from ammonia or amines. The value for x, which is the number of sulfonic acid residues per polymer repeat unit, will vary for each polymer example and can be calculated from the ion exchange capacity (I.E.C. expressed as milliequivalents of sulfonic acid residues per gram of sulfonated polymer). The latter is determined analytically from sulfur contents found with each sulfonated polymer. The useful sulfonic acid content range is found to be different for each individual polymer type, but in general is very similar for polymers within the same structural formula class as shown in Formulae I, II, and III.

The average IEC requirement for membranes of this invention becomes greater as one compares polymers of class I through III, and this is believed to be due to corresponding decreases in hydrophilicity in the unsulfonated starting polymer. Thus while polyarylether sulfones of class I are effective with an IEC range of about 0.3 to 2.2 meq/g,

polyphenylene oxides of class III must usually be in the range of about 1.3 to 2.9 meq/g. There are two requirements of the polymers used in the present invention with respect to sulfonic acid content. The first requirement is that these polymers be soluble in the preferred solvents of the invention and yet not be appreciably soluble in a membrane test feed - such as saline water. The ranges of IEC given above correspond to the minimum degree of sulfonation for sulubility in the preferred solvents and maximum allowable degree of sulfonation for stability in aqueous environments, respectively. It is pointed out that as these polymers become gradually more sulfonated they progress from solubility in solvents of low to moderate polarity and hydrogen bonding ability to ones with moderate to high values, and ultimately to solubility in water.

The second requirement is that the IEC be that which yields the best combination of membrane flux and rejection performance for the particular separation application. Fortunately, this is nearly always found to be near the center of the broad ranges specified. It is generally found in practice that higher membrane IEC values lead to higher water permeability with proportionately higher solute passage and conversely, lower-membrane IEC values lead to lower water permeability with proportionately lower solute passage (higher rejection). Thus it is possible to tailor the performance of composite RO membranes by optimizing the degree of sulfonation of the polyarylether thin film polymer to narrow ranges of IEC.

The criteria for the solvent system employed in the coating process is that it must be a good solvent for the sulfonated polyarylether, a nonsolvent for the porous substrate, of low enough surface tension to wet the porous substrate, and volatile enough to be removed by gentle heating. The fact that the sulfonated polyarylethers and the porous substrate polymers may be very similar chemically may limit the number of effective solvents, though investigation of solubility parameters for both polymers has uncovered several viable types.

The present invention resides largely in the finding that the membrane properties of sulfonated polyarylethers can be surprisingly enhanced when applied to a substrate from a particular novel, potentiating solvent system. The membranes made according to this invention thus have a combination of improved flux/rejection when compared to sulfonated polyarylether membranes prepared heretofore using the conventional solvents and solvent systems. Accordingly, as used herein and in the appended claims, the expression "potentiating solvent system" is intended to describe novel solvents and solvent mixtures heretofore unknown for sulfonated polyarylether coatings and which unexpectedly produce membranes of improved rejection and/or flux qualities.

The potentiating solvent system used comprises significant amounts of formic acid, that is at least 20% to 100% formic acid, with the remainder being cosolvents and flux-enhancing additives selected from water, formamide, alcohols, alkylene diols and triols and alkylene glycol alkyl ethers, and optionally minor amounts of alkali metal salts.

The solubility parameter approach, particularly the three-dimensional system proposed by Hansen has been used effectively in predicting liquid miscibility and polymer solubility in some instances. This three-dimensional system assumes that the total cohesive energy which holds a liquid together (E) can be divided into contributions from dispersion (London) forces, $E_d$; permanent dipole-dipole forces, $E_p$; and hydrogen bonding forces $E_h$. Hansen's equation is as follows:

$$\delta_t^2 = \delta_d^2 + \delta_p^2 + \delta_h^2$$

where

$$\delta d = (E_d/V)^{1}/_{2}$$

$$\delta p = (E_p/V)^{1}/_{2}$$

$$\delta h = (E_h/V)^{1}/_{2}$$

and V = molar volume of the solvent.

Table I below shows the total and component solubility parameters as well as other physical data for two sulfonated polyarylethers, a porous substrate polymer (polysulfone), and solvent systems which are compatible with the porous substrate polymer. The primary differences between sulfonated polymers I-2 and I-5 and polysulfone parameter values are found with the $\delta_h$ and $\delta_p$ components due to sulfonic acid functionality and decreased hydrocarbon character of the former.

Experiments have shown that the high boiling formamide solvent is incapable of producing thin film RO composite membranes with high salt rejection, and this is believed to be due to a combination of excessive surface tension and high boiling point of this liquid. 2-methoxyethanol, a weaker SP solvent, often requires the addition of at least 20% formic acid for adequate solvency and even greater percentages of the latter for high RO membrane salt rejection. Addition of water to this solvent doesn't improve SP solubility, presumably due to an imbalance in resultant $\delta_p$ and $\delta_h$ component values. Addition of increasing water contents to formic acid, produces a trade-off in resultant membrane performance,

amounting to higher fluxes and proportionately lower salt rejections. It has been found that, in general, any strongly-hydrogen bonding substance when added to the coating solution produces this behavior. This allows another dimension in tailoring formulations to meet various desired water permeability-permselectivity goals.

It is important to note that the solvent systems for SP's shown in Table I have been observed to swell a porous polysulfone RO substrate polymer without actually damaging it, and although this invention isn't limited by theory, it is theorized that this behavior leads to desirable entanglement of the thin film and porous substrate polymers in the composite RO membranes of the invention. It is further deduced that this expected phenomenon accounts for the remarkable adhesion and durability of these thin film composites. Formic acid has been found to be an extremely effective solvent for the practice of this invention. The power of this solvent is believed to be the result of not only a good solubility parameter profile, but also the result of its small size and ionizing ability. Also advantageous are (1) the ability of this solvent to swell a porous polymeric substrate without harming it and (2) relative ease of evaporation (b.p. =101°C).

A demonstration of the swelling action of formic acid on typical anisotropic polysulfone substrates used for SP membrane fabrication is illustrated below in Tables A and B. Included in these tables are comparisons with 2-methoxyethanol (ethylene glycol monomethyl ether) which has been used by others in SP membrane fabrication but which by itself is not as effective as formic acid. As seen in Table A, formic acid yielded 50% greater substrate water flux than the control (isopropanol/water) treatment whereas 2-methoxyethanol yielded virtually the same water flux as the control. Table B indicates even more dramatically the differences between solvents. Here polysulfone membrane substrates were coated with solvents and dried using the same technique employed during SP membrane fabrication. Testing of these relatively hydropbobic polysulfone substrates was performed by first rewetting briefly at 400psig (2.76MPa), then lowering to 223psig (1.54MPa) at which pressure water fluxes were taken. The formic acid coated example yielded 23% greater water flux than the control whereas the 2-methoxyethanol case produced approximately half the control flux.

Table A

| Water Flux Rates of Polysulfone Membrane Substrates Soaked in Different Solvents Then Finally Equilibrated in Water | |
|---|---|
| Solvent Treatment | Relative Flux Rate @ 55 psig (379kPa) |
| 50:50Isopropanol/Water (Control) | 100 |
| Formic Acid | 150 |
| 2-methoxyethanol | 95.6 |

Table B

| Water Flux Rates of Polysulfone Membrane Substrates Surface Coated with Different Solvents, Dried 3 Minutes @ 55°C, Rewet with Water @ 400 psig (2.76MPa) | |
|---|---|
| Treatment | Relative Flux Rate @ 223 psig (1.54MPa) |
| None (control) | 100 |
| Formic Acid | 123 |
| 2-methoxyethanol | 47.2 |

There is, in addition to the strongly hydrogen bonding liquids just mentioned, a wide variety of compounds, consisting of alkali metal salts which are extremely potent in their ability to increase water permeability of the SP membranes. While many such compounds are effective, lithium chloride is preferred due to its potency in maximizing water flux of SP membranes at very little penalty to salt rejection. Although this invention is not limited by any theory, it is theoretically possible that lithium ion with its large hydration per size ratio is able to retain maximal water contents whether as the counter ion of the polymer sulfonic acid and/or simply as bulk salt (hygroscopic) residue distributed throughout the thin film of an RO composite membrane. The amount of lithim chloride incorporated into the coating solution formulation is

dependent on the particular SP polymer being used, which is ultimately dictated by the desired combination of membrane flux and rejection performance.

Solubility parameter data for some typical solvents and non-solvents for the SP's used by the present invention are set forth in the following Table.

TABLE 1

SOLUBILITY PARAMETER DATA[2]

| Sulfonated Polyarylether (S.P.) | H-Bonding[5] Group | $\delta_t$ | $\delta_d$ | $\delta_p$ | $\delta_h$ | Surface Tension dynes/cm ($10^{-3}$ N/m) | Dipole Moment $u \times 10^{18}$ esu | Boiling Point (°C) | Azeotropic Composition % Solvent/% $H_2O$ Boiling Points (°C) |
|---|---|---|---|---|---|---|---|---|---|
| Polymer I-2[4] (IEC=.48 meq/g) | - | 11.8 | 8.6 | 5.9 | 5.4 | - | - | - | - |
| Polymer I-5 (IEC= 1.29 meq/g) | - | 12.8 | 8.4 | 7.4 | 6.1 | - | - | - | - |
| Porous Substrate Polymer | | | | | | | | | |
| Polysulfone[4] | - | 10.8 | 8.7 | 5.4 | 3.4 | - | - | - | - |
| Solvents for S.P.[1] (solubility parameter data for various solvents) | | | | | | | | | |
| Formamide | S | 17.9 | 8.4 | 12.8 | 9.3 | 58.2 | 3.25 | 211 | - |
| 50/50 Acetonitrile/Water* | (S) | 16.4 | 7.6 | 8.3 | 11.9 | 30.9 | - | - | 85.8/14.2, 76 |
| 50/50 Acetone/Water* | (S) | 15.7 | 7.6 | 6.5 | 12.1 | 30.4 | - | - | 88.5/11.5, 56.1 |
| Formic Acid | S | 12.2 | 7.0 | 5.8 | 8.1 | 37.6 | 1.52 | 101 | 77.5/22.5, 107 |
| 2-Methoxy ethanol | M | 12.1 | 7.9 | 4.5 | 8.0 | 30.5 | 1.5 | 125 | 22.2/77.8, 99.9 |
| Non-Solvents for S.P. | | | | | | | | | |
| Water | S | 23.4 | 7.6 | 7.8 | 20.7 | 72.8 | 1.82 | 100 | - |
| Acetonitrile | P | 12.0 | 7.5 | 8.8 | 3.0 | 29.3 | 3.84 | 82 | - |
| Acetone[3] | M | 9.8 | 7.6 | 5.1 | 3.4 | 23.7 | 2.89 | 56.5 | - |

* Estimated parameter values calculated from the expression:

$$\delta = \sum_i \phi \delta_i$$

where $\phi$ = volume fraction and $\delta_i$ = solubility parameter of the components[2].

1 Hansen, C.M., I & EC Product Research and Development (Volume 8, No. 1, March 1969), p. 2-11.

2 Barton, A.F., Chemical Reviews, Vol. 75, No. 6, 1975, p. 731-751.

3 Attacks polysulfone substrate.

4 Data from Friedrich, et al, Desalination, 36, 1981, p. 39-62.

5 S = strong; M = medium; P = poor.

It has been demonstrated that deposition of the SP solution onto the porous polymer substrate can be accomplished by a variety of controlled coating processes available from the converting industry. The amount of SP polymer deposited on the porous substrate should be as little as is needed for thin film strength and continuity in order to yield maximal water permeation with good solute rejections. In practice, this can be from 10 to 100 mg SP/$ft^2$ (about 0.1 to 1g/$m^2$) of porous substrate although the preferred loading is from 20 to 50 mg/$ft^2$ (about 0.2-0.5 g/$m^2$). Estimated thin film thickness for this loading is on the order of 2150-5400 Å (0.215-0.540 μm).

Laboratory scale coating of porous substrates to form RO composites has been performed conveniently by brushing on the SP solution, whereas continuous (moving web) coating (pilot scale production) has been demonstrated on more sophisticated machine processes, such as single and double roll bead, rod, and spray coaters. Subsequent to the solution deposition, a solvent removal step must be performed which yields an essentially dry, thin film composite. This consists of passing air at 0-120°C temperature and velocity of 0-3,000 ft/min(0-15m/s) across the nascent thin film surface for a period of a few seconds to several minutes or even several hours. The solvent removal step is a critical one with respect to the final transport properties of the thin film composite RO membrane. The removal process is keyed to time, temperature, and velocity of the air applied, with greater values of these conditions yielding lower water permeability-higher permselectivity membranes, and lesser values yielding conversely higher water permeability/lower permselectivity membranes. For RO membranes, the preferred temperature and time range is 40-80°C and 0.5-10 minutes, respectively. The forced air velocity is less critical but can be used advantageously to compensate to some degree for lesser temperatures and/or times applied. It must be mentioned that other methods of heating such as infrared etc, with or without forced air have been investigated and found to be acceptable but less desirable than the preferred method.

Optional post treatments consisting of organic solvents and aqueous mixtures with or without thermal treatments can be given to the finished composite RO membrane for the purpose of improving permeability via swelling and/or hydration of the thin film. The post treatment may alternatively include further stabilization or "tightening" of the thin film polymer through ionic crosslinking or salt formation using solutions of multivalent metal salts, or through basic nitrogen containing compounds. Thermal treatments in aqueous media may be applied for the purpose or reordering the permselective barrier and thus further affecting membrane transport behavior. It should be understood that these post treatments are not normally required or performed but may be performed as an optional refinement step to achieve specific desired membrane performance.

The choice in porous substrate is governed by much of the same criteria applied to the SP polymer except that resistance to solvents for the substrate is required. Again it is prefereble to utilize polymers with a high degree of resistance to chemical degradation-especially by oxidizing species such as chlorine, damage caused by wide ranges of pH, bacteria and enzymes, flow and creep under pressure, and certain organic solvents. As with any polymer application, tradeoffs in these properties exist and only careful consideration dictates the best choice of a specific porous substrate polymer. Examples of porous substrate polymers useful by the invention include but are not limited to: polyarylether sulfones, polyaryletherketones, polyphenylene ethers, polyphenylene thioethers, polyimides, polyetherimides, polybenzimidazoles, polyesters, polyvinylidine fluoride, polychloroethers, polycarbonates, polystyrene, polyvinylchlorides, polyacrylonitrile and various copolymers of the last three types, etc. Inorganic porous materials such as ceramics and metals may also be used as substrates in some specific instances. The preferred polymers for thin film composite membranes of this invention are polysulfone and polyarylether sulfones. These porous substrates may have surface pores of a size range of 0.001 - 0.5 μm (1-500 nm), though the preferred range is from 0.001 - 0.03 μm (1-30 nm). The preferred sizes of pores are ideally small enough to prevent intrusion of the thin film SP solution, which would result in low permeability, and at the same time are adequately large for insignificant contribution to hydrodynamic resistance. A further problem with excessively large pores in RO applications is the inability to support the thin film polymer of a composite RO membrane under applied pressures resulting in losses to permselectivity.

A critical relationship has been found to exist between the particular SP and porous substrate combination and the resultant composite membrane performance. It has been found that membranes made from porous polymer supports containing substantially only ether and sulfone linkages have consistently lower flux and higher salt rejection (are "tighter") than ones made from porous supports containing additional alkyl linkages. Whether this is due to pore size differences, surface energy differences (and thus wetability), or other phenomena between the more hydrophilic ether-sulfone and the less hydrophilic alkyl-ether-sulfone types of aromatic porous substrate polymers isn't known at this time. Nevertheless, an important empirical relationship has been uncovered and put to use in this invention by combining the appropriate SP and porous substrate polymer to yield the best thin film composite membranes.

The above mentioned porous substrates useful by this invention may be in flat sheet form with or without an additional porous polymeric supportive sheet (such as those carrier fabrics commonly used as moving webs in the flatsheet RO or UF membrane industry), in hollow fiber form, or in tubular form.

Spiral wound flatsheet, ordinary flatsheet, hollow fiber, or tubular modules prepared from thin film composite membranes of this invention are useful for separations by reverse osmosis. Utility of these membranes includes both purification of water through removal of salts, organic compounds, viruses, bacteria, colloidal substances, sediments, etc. as well as recovery or concentration of valuable substances pertaining to dairy, fermentation, paper & pulp, fruit juice, electroplating, mining, pharmaceutical, electronics, painting and chemical industries. Particularly advantageous is the utilization of the above membranes for separation processes in which high tolerance to oxidizing agents such as chlorine and/or extremes of pH are desired.

The following Examples serve to further illustrate the invention but should not be construed as in anyway limiting the broader aspects thereof.

EXAMPLE 1

An 18% (by weight) solution of polysulfone (Udel P3500, Union Carbide) in 75% N,N'-dimethyl formamide and 7% bis-(2-methoxyethyl) ether was cast on a paper-like porous sheet then gelled in a water bath to produce a porous substrate. This porous substrate was subsequently dried at 105°C for 5 minutes and brush coated evenly with a .25% (wt./vol.) solution of sulfonated polyarylether (formula I-5 above - 1:5 sulfonated Victrex - ICI Americas, IEC = 1.29. meq/g sodium salt form) containing 0.14% lithium chloride in formic acid (90% solution). After forced air drying at 55°C for 3 minutes, samples of this membrane were tested for reverse osmosis properties on a 2000ppm, pH8 sodium chloride feed at 200 psig (1.38MPa) (NDP). The performance after 1 hour for a mean of 6 samples was: 16.8GFD (684 $lm^{-2}d^{-1}$) flux and 96.7% salt rejection.

EXAMPLE 2 (comparative)

A porous substrate was prepared and coated as in Example 1 except this time with a 0.6% SP-containing solution with no additives in a solvent mixture of 95% acetonitrile/5% water. After the same drying treatment as Example 1, samples of membrane tested on a 5000 ppm, pH6 sodium chloride feed at 343 psig (2.36 MPa) NDP for 1-hour gave 15.5 GFD (631 $lm^{-2}d^{-1}$) flux and 88.9% salt rejection.

EXAMPLE 3 (comparative)

An RO membrane was prepared as in Example 2 except 0.25% SP was used and 7% of the acetonitrile in the coating solution was replaced by formic acid. Samples of this membrane gave a mean (3 samples) performance of 9.6GFD (391 $lm^{-2}d^{-1}$) flux and 96.9% rejection when tested for 1-hour on a pH8, 2000 ppm sodium chloride feed at 377 psig (2.60MPa) NDP.

EXAMPLE 4

A membrane was prepared and tested as in Example 2 except 0.75% SP was used in an 80% 2-methoxyethanol/20% formic acid coating solution and gave a mean (3 samples) performance after 1 hour of 27.5 GFD (1120 $lm^{-2}d^{-1}$) flux and 89.4% salt rejection.

EXAMPLE 5 (comparative)

A membrane was prepared and tested as in Example 4 except that a 94% 2-methoxyethanol/6% formamide coating solvent system was employed and this membrane yielded 136 GFD (5540 $lm^{-2}d^{-1}$) flux and 38.0% salt rejection after 1 hour (mean of 3 samples).

EXAMPLE 6 (comparative)

A membrane was prepared and tested as in Example 1 except that the coating solvent was 100% formamide. Mean performance (2 samples) after 1 hour was 127GFD (5170 $lm^{-2}d^{-1}$) and 12% salt rejection.

EXAMPLE 7

A 21% (by weight) solution of polyimide (UpJohn 2080) was formulated as described in US-A-4,307,135, cast on a paper like porous polymer sheet, then gelled in a water bath to produce a porous substrate. After saturating this substrate in a 20% solution of glycerine in methanol for 8 minutes, this substrate was coated and dried as in Example 1. Testing on a pH8, 2000 ppm sodium chloride feed at 377psig (2.60MPa) NDP gave 15.7GFD (639 $lm^{-2}d^{-1}$) flux and 99.5% salt rejection after 1 hour (mean of 2 samples).

EXAMPLE 8

A porous support was prepared as in Example 1 except that Victrex polyethersulfone (300P ICI Americas) was used for the support. When coated and tested as in Example 1, resultant membrane performance was 6.5GFD (265 $lm^{-2}d^{-1}$) flux and 98.0% salt rejection (mean of 4 samples).

EXAMPLE 9

A porous support was prepared as in Example 1 except that Radel® polyphenylsulfone (A-400, Union Carbide) was used. When coated and tested as in Example 1, resultant membrane performance was 4.8GFD (196 $lm^{-2}d^{-1}$) flux and 97.6% salt rejection (mean of 3 samples).

EXAMPLE 10

A porous support was prepared as in Example 1 except that a 90% Udel polysulfone/10% Victrex polyethersulfone mixture was used. This substrate was coated and tested as in Example 1 except that 377psig (2.60MPa) NDP was used in testing. Membrane performance after 1-hour was 23.8 GFD (969 $lm^{-2}d^{-1}$) flux and 98.0% salt rejection (mean of 4 samples).

EXAMPLE 11

A membrane was prepared as in Example 1 except that formula I-1, above (IEC = approximately 1.0 meq/g, sodium salt form) was used in conjunction with 0.07% lithium chloride. Membrane performance, when tested as in Example 1, was 13.6 GFD (554 $lm^{-2}d^{-1}$) flux and 96.6% salt rejection (mean of 3 samples).

EXAMPLE 12

A membrane was prepared and tested as in Example 11 except that the porous substrate used was that in Example 8. Membrane performance was 6.0GFD (244 $lm^{-2}d^{-1}$) flux and 97.9% salt rejection (mean of 4 samples).

EXAMPLE 13

A membrane was prepared and tested as in Example 1 except that formula I-2 SP, above (IEC - 0.86 meq/g, sodium salt form) was used and at a concentration of 0.5%. Membrane performance was 17.4 GFD (709 $lm^{-2}d^{-1}$) flux and 90.8% salt rejection (mean of 3 samples).

EXAMPLE 14

A membrane was prepared and tested as in Example 13 except the coating solution was diluted in half and the porous substrate of Example 8 was used. Membrane performance was 19.5GFD (974 $lm^{-2}d^{-1}$) flux and 93.9% salt rejection (mean of 2 samples).

EXAMPLE 15

A membrane was prepared and tested as in Example 1 except that a solution of 0.5% of formula I-4 SP, above (IEC = 1.9 meq/g, sodium salt form) without additive was used. Membrane performance was 234 GFD (9530 $lm^{-2}d^{-1}$) flux and 20% salt rejection (mean of 3 samples).

EXAMPLE 16

A membrane was prepared and tested as in Example 15 except that the IEC was 1.29 meq/g and the porous substrate used was that of Example 8. Membrane performance was 8.1 GFD (330 $lm^{-2}d^{-1}$) flux and 93.4% salt rejection (mean of 2 samples).

EXAMPLE 17

A membrane was prepared and tested as in Example 16 except that 0.28% lithium chloride was included in the coating solution. Membrane performance was 60.1 GFD (2450 $lm^{-2}d^{-1}$) flux and 59.4% salt rejection (mean of 2 samples).

EXAMPLE 18

A membrane was prepared and tested as in Example 16 except that the coating solution was diluted in half and the porous substrate was that used in Example 9. Membrane performance was 7.6 GFD (310 $lm^{-2}d^{-1}$) and 93.7% salt rejection (mean of 2 samples).

EXAMPLE 19

A membrane was prepared and tested as in Example 15 except that the coating solution contained formula II SP, above (PEEK® 450P, ICI Americas, IEC unknown, sodium salt form without additive). Membrane performance was 15.3 GFD (623 $lm^{-2}d^{-1}$) flux and 92.8% salt rejection (mean of 2 samples).

EXAMPLE 20

A membrane was prepared and tested as in Example 15 except that formula III-1 SP, above (IEC unknown, free acid form) was used. Membrane performance for this case was 17.1 GFD (696 $lm^{-2}d^{-1}$) flux and 90.5% salt rejection (mean of 2 samples).

EXAMPLE 21

A porous polysulfone substrate prepared as in Example 1 was coated on a continuous processing machine by spraying a 0.22% by wt. solution of sulfonated polyethersulfone (IEC = 1.36 meq/g) in 90:10 formic acid: water containing 0.2% lithium chloride. This coating solution, which was applied at a loading of 13g/$ft^2$ (140g/$m^2$) was evaporated in a forced air oven initially at 70°C for a period of 35 seconds then at 80°C for 2.5 minutes to yield a composite membrane. Samples of this membrane when tested on a 2200 ppm sodium chloride feed (pH 8.2) at 200psig (1.38MPa) NDP yields 14.9GFD (607 $lm^{-2}d^{-1}$) flux and 97.0% rejection after 24 hours.

EXAMPLE 22

Demonstration of reverse osmosis membrane performance stability on test with and without added 6 ppm active chlorine at pH 8.2 has been carried out using two inch spiral-wound elements of membrane (4$ft^2$ area) (0.37$m^2$) made by a continuous machine, based on the fabrication method of Example 1. After 420 hours of equilibration testing on natural pH 8.2 San Diego tapwater ( 600 ppm total dissolved solids-"TDS") at 200psig (1.38MPa)NDP, performance was 7.5 GFD (305 $lm^{-2}d^{-1}$) flux and 97.5% rejection (TDS). After this point, 6 ppm average free chlorine was introduced and kept at this level while maintaining all of the original test conditions for a period of 550 hours. Flux and rejection performance remained virtually unchanged at 7.4 GFD (301 $lm^{-2}d^{-1}$) flux and 98.1% rejection. Not only has stability on a live feed been demonstrated, but also excellent tolerance to a commonly used water disinfection chemical - chlorine.

EXAMPLE 23

Another two-inch spiral wound membrane element very similar to that described in Example 22 was RO tested on a pH 8.3 live San Diego tapwater feed containing 670 ppm TDS, at 392psig (2.70MPa) NDP. Equilibrated performance on this feed consisted of 15.1 GFD (615 $lm^{-2}d^{-1}$) flux and 98.1% rejection. This membrane element was then subjected to a variety of aggressive aqueous cleaning agents, many of which are used in actual RO membrane applications. Table 2 below lists the sequence of stepwise closed-loop recirculations of the various chemical agents. After all of these treatments, many of which would be too harsh for other commercially important membranes, including cellulose acetates, polyetherureas, and polyamides, the tested membrane element yielded virtually the original performance, that is, 18.4% GFD (749 $lm^{-2}d^{-1}$) flux and 98.0% rejection.

TABLE 2

| Agent | Concentration | pH | Time Recirculated (Hours) |
|---|---|---|---|
| Sodium Hydroxide and Sodium Chloride | 0.1N | 12.8 | 1 |

TABLE 2 (continued)

| Agent | Concentration | pH | Time Recirculated (Hours) |
|---|---|---|---|
| Citric Acid | 1% | 2.4 | 2.3 |
| Urea | 30% | 8.2 | 4.1 |
| Sodium dodecyl sulfate | 1000 ppm | 7.5 | 1.6 |
| Sodium hypochlorite | 115 ppm | 9.1 | 1.5 |
| Sodium bisulfite | 1000 ppm | 4.5 | 3.1 |
| Oxalic Acid | 1% | 1.8 | 1 |
| EDTA and sodium tripolyphosphate | 1% | 9.8 | 1 |

In ultrafiltration applications and low pressure RO, one very common membrane form for industrial and laboratory uses is the hollow fiber. Hollow fiber membranes are mounted, usually in cartridges, with the open ends of the fibers potted at each end in an adhesive plug sealed to the cylindrical cartridge walls at either end thereof. The membrane barrier layer or "skin" is usually on the inside of the hollow fiber or "lumen". The process feed usually enters one end of the hollow fiber and a concentrated solution exits at the other end. Permeate, i.e., the liquid which passes through the membrane normally exits the cartridge from one or more ports in the cartridge shell.

To demonstrate the effects of coating hollow fibre membranes with a sulfonated polyarylether sulfone polymer, industrial grade membranes in cartridge form were treated. The fiber types which were coated included polysulfone ultrafiltration products having molecular weight cut-offs ranging from 1,000 to 100,000 and with fiber internal diameters from 0.02-0.06in. (0.51-1.52mm).

Among the polymers used for the substrate fibers were Udel® and Radel® (Union Carbide Corp.) and Victrex (ICI).

To coat the hollow fibers, the cartridge containing the potted membranes was clamped vertically and the coating solution was applied to the interior of the fibers only. The polymer solution was held in contact with the membrane surface for a short period usually about 15 seconds, and then allowed to drain. After the hollow fiber was coated with the polymer solution, the cartridge was placed on a curing fixture where heated dry air was forced through the lumen of the fibers. Heated air can also be blown onto the exterior of the fibers. The curing parameters which can be varied are air temperature, air flow rate and drying time. The temperature of the heated air in the fiber lumen can range from 30°C to 100°C, although 48°-58°C is preferable. The air flow rate can range from 0.25CFM (cubic feet per minute) to 12CFM (7.1 to 340l/minute) and is highly dependent on air temperature and time.

The following specific examples serve to teach the formation of coatings or films on commercially available hollow fiber membranes to produce UF, MF or low pressure RO membranes. The SP's were prepared by processes either illustrated above or otherwise well known to the art heretofore. A common method of sulfonation of polysulfones may be found in Coplan U. S. Patent No. 4,413,106, issued November 1, 1983.

EXAMPLE 24

A reverse osmosis membrane was formed on the internal surface of a dried hollow fiber support using a sulfonated polysulfone polymer having an IEC of 1.29 - 1.4 meq/g This was accomplished by exposing the interior of the support fiber to a solution containing 0.50% of the sulfonated polymer, 0.56% LiCl, and 99.36% formic acid for 30 seconds. Heated, dry air was thereafter passed through the lumen of the fibers at 50°C and a flow rate of 0.17 CFM (4.8 l $min^{-1}$) for 10 minutes. The performance of this composite membrane was 15GFD (610 $lm^{-2}d^{-1}$) flux and 75% salt rejection when tested on a feed of 5000 ppm NaC1 and 240 psi (1.65MPa) NDP.

EXAMPLE 25

A reverse osmosis membrane was formed following the same procedure described in Example 24 except that a wet support was used. The performance of this composite membrane at the same test conditions was 200 GFD (8150 $lm^{-2}d^{-1}$) flux and 25% salt rejection.

EXAMPLE 26

Coated membranes were prepared using the same procedure as Example 24 except the support was partially wet. A reverse osmosis membrane coating was formed using this polymer. The performance of this composite membrane

at the same test conditions as Example 25 was 80GFD (3260 $lm^{-2}d^{-1}$) flux and 50% salt rejection.

EXAMPLE 27

A reverse osmosis membrane was formed using the same procedure described in Example 24 except the cure time was increased to 20 minutes. The performance of this composite membrane at the same test conditions as Example 24 was 9 GFD (367 $lm^{-2}d^{-1}$) flux and 81% salt rejection.

Several common proprietary commercial grades of polyarylether polymers useful by the present invention are illustrated by the following formulae:

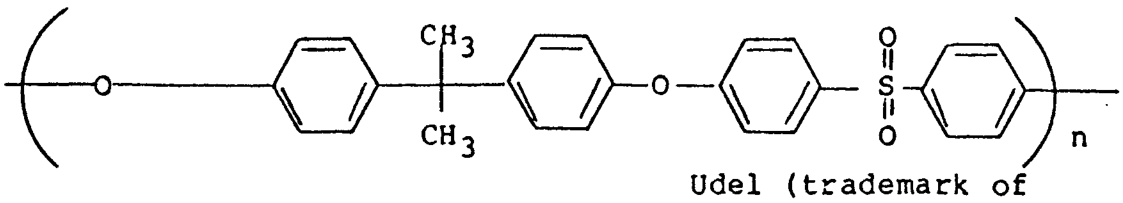

Udel (trademark of Union Carbide)

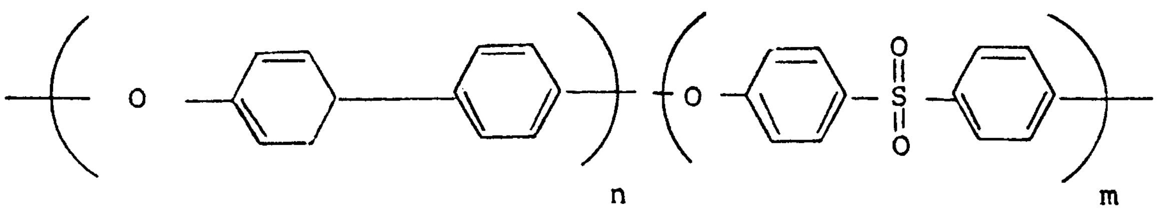

Radel (trademark of Union Carbide)

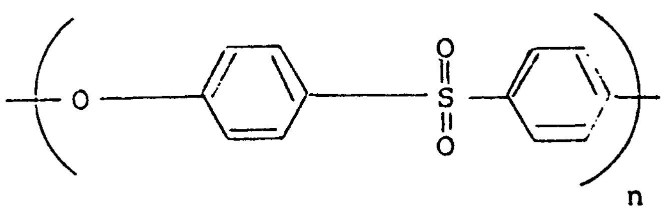

Victrex (trademark of I.C.I.)

## Claims

1. A process for making a composite reverse osmosis membrane comprising a porous polymeric membrane substrate, which process comprises (a) forming a solution of sulfonated polyarylether polymer in a solvent system which is polar, volatile, of low enough surface tension to wet the porous substrate, and though optionally capable of swelling the porous substrate, is not able to dissolve it, (b) uniformly applying said solution of the sulfonated polyarylether to at least one surface of the porous substrate and (c) removing said solvent from the solution to form a film of the sulfonated polyarylether adherently attached to the porous substrate, characterised in that the solvent system comprises at least 20% to 100% formic acid with any remainder being selected from:

(a) water and optionally minor amounts of alkali metal salts, and
(b) a solvent selected from the group consisting of formamide, alcohols, alkylene diols and triols and alkylene glycol alkyl ethers
and in that the solution of sulphonated polyaryl ether is applied in an amount in the range 10-100 mg polymer per $ft^2$ (0.1 to 1g polymer per $m^2$) substrate.

**2.** A process according to claim 1 where the solvent system comprises a minor amount of a lithium salt preferably an amount below 2.0% by weight of the solvent system.

**3.** A process according to any preceding claim in which the said solution contains the sulfonated polyarylether polymer in an amount of up to 0.75% weight per volume %.

**4.** A process according to any preceding claim in which step c comprises a drying step in which air is passed across the coating at a temperature in the range 0 to 120°C.

**5.** A process according to claim 4 in which the said temperature is in the range 40 to 80°C.

**6.** A process according to any preceding claim wherein the porous substrate is an anisotropic polymeric membrane comprising a polymer selected from the group consisting of polyarylether sulfones, polyarylether ketones, polyphenylene ethers, polyphenylene thioethers, polyimides, polyetherimides, polybenzimidazoles, polyesters, polyvinylidene fluoride, polychloroethers, polycarbonates, polystyrene, polyvinylchlorides, polysulfone, polyethersulfone and polyacrylonitrile and copolymers thereof, preferably polyarylether sulfone.

**7.** A process according to any preceding claim in which the porous substrate comprises polysulfone polymer.

**8.** A process according to any preceding claim wherein the sulfonated polyarylether coating or film has an ion exchange capacity in the range 0.2 to 2.0 meq/g.

**9.** A process according to any preceding claim wherein the polymeric film comprises a compound selected from:

A) a sulfonated polyarylether sulfone of the formula:

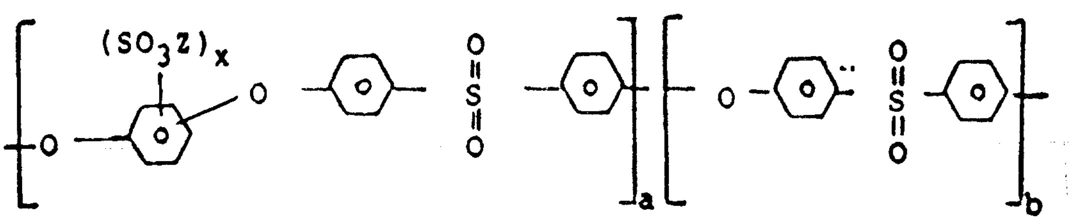

wherein Z is hydrogen, an alkali metal, or nitrogen containing species derived from ammonia or amines, the b/a ratio is from 0 to 20 and x is an average number such as to give an ion exchange capacity for the sulfonated polymer of between 0.2 and 2.0 meq/g,
B) a sulfonated polyarylether sulfone of the formula:

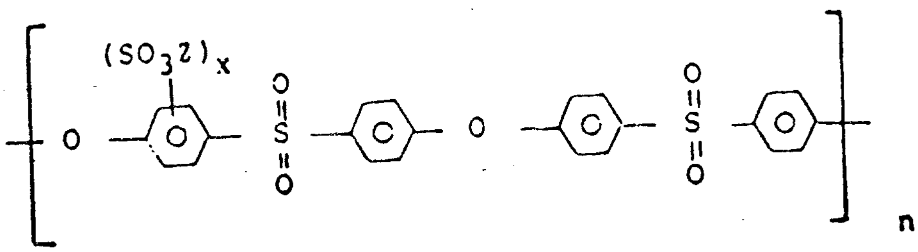

wherein Z is hydrogen, an alkali metal, or nitrogen containing species derived from ammonia or amines and x is an average number such as to give an ion exchange capacity for the sulfonated polyarylether sulfone polymer of between 0.2 and 2.0 meq/g, and

C) a sulfonated polyarylether ketone of the formula:

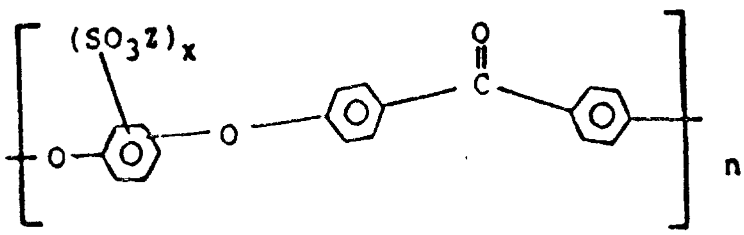

wherein Z is hydrogen, an alkali metal, or nitrogen containing species derived from ammonia or amines and x is an average number such as to give an ion exchange capacity for the sulfonated polyarylether ketone polymer of between 0.2 and 2.0 meq/g.

**10.** A process according to any preceding claim wherein the polymeric substrate is an anisotropic membrane comprising a polysulfone or a polyethersulfone.

**11.** A process according to claim 10 in which the sulfonated polyarylether film has an ion exchange capacity between 0.2 and 2.0 meq/g and preferably wherein the potentiating solvent system comprises a minor amount of lithium salt.

**Patentansprüche**

**1.** Verfahren zum Herstellen einer zusammengesetzten Umkehrosmose-Membran, die ein poröses polymeres Membransubstrat aufweist, wobei das Verfahren die folgenden Schritte aufweist: (a) Bilden einer Lösung aus sulfoniertem Polyaryletherpolymer in einem Lösungsmittelsystem, das polar flüchtig ist, eine ausreichend geringe Grenzflächenspannung hat, um das poröse Substrat zu benetzen, und obwohl es fakultativ imstande ist, das poröse Substrat aufquellen zu lassen, nicht imstande ist, es aufzulösen, (b) gleichmäßiges Aufbringen der Lösung aus dem sulfonierten Polyarylether auf wenigstens eine Oberfläche des porösen Substrats und (c) Entfernen des Lösungsmittels aus der Lösung, um eine Schicht des sulfonierten Polyarylethers zu bilden, die haftend an dem porösen Substrat angebracht ist,
dadurch gekennzeichnet, daß
das Lösungsmittelsystem wenigstens 20 % bis 100 % Ameisensäure aufweist, wobei irgendein Rest ausgewählt wird aus:

(a) Wasser und fakultativ geringen Mengen Alkalimetallsalzen und

(b) einem Lösungsmittel, das aus der Gruppe ausgewählt ist, die aus Formamid, Alkoholen, Alkylendiolen und -triolen und Alkylenglykolalkylethern besteht, und daß die Lösung aus sulfoniertem Polyarylether in einer Menge im Bereich von 10 bis 100 mg Polymer pro $ft^2$ (0,1 bis 1 g Polymer pro $m^2$) Substrat aufgebracht wird.

**2.** Verfahren nach Anspruch 1,
wobei das Lösungsmittelsystem eine geringe Menge von einem Lithiumsalz, bevorzugt eine Menge unter 2,0 Gew.-% des Lösungsmittelsystems aufweist.

3. Verfahren nach einem der vorhergehenden Ansprüche, wobei die Lösung das sulfonierte Polyaryletherpolymer in einer Menge von bis zu 0,75 % Gew. pro Volumen enthält.

4. Verfahren nach einem der vorhergehenden Ansprüche, wobei Schritt c einen Trocknungsschritt aufweist, in dem Luft bei einer Temperatur im Bereich von 0°C bis 120°C über den Überzug geleitet wird.

5. Verfahren nach Anspruch 4, wobei die genannte Temperatur im Bereich von 40°C bis 80 C ist.

6. Verfahren nach einem der vorhergehenden Ansprüche, wobei das poröse Substrat eine anisotrope polymere Membran ist, die ein Polymer aufweist, das aus der Gruppe ausgewählt ist, die besteht aus: Polyarylethersulfonen, Polyaryletherketonen, Polyphenylenethern, Polyphenylenthioethern, Polyimiden, Polyetherimiden, Polybenzimidazolen, Polyestern, Polyvinylidenfluorid, Polychlorethern, Polycarbonaten, Polystyrol, Polyvinylchloriden, Polysulfon, Polyethersulfon, und Polyacrylnitril und Copolymeren davon, bevorzugt Polyarylethersulfon.

7. Verfahren nach einem der vorhergehenden Ansprüche, wobei das poröse Substrat Polysulfonpolymer aufweist.

8. Verfahren nach einem der vorhergehenden Ansprüche, wobei der sulfonierte Polyaryletherüberzug oder die -schicht ein Ionenaustauschvermögen im Bereich von 0,2 bis 2,0 meq/g hat.

9. Verfahren nach einem der vorhergehenden Ansprüche, wobei die polymere Schicht eine Verbindung aufweist, die ausgewählt ist aus:

A) einem sulfonierten Polyarylethersulfon mit der Formel:

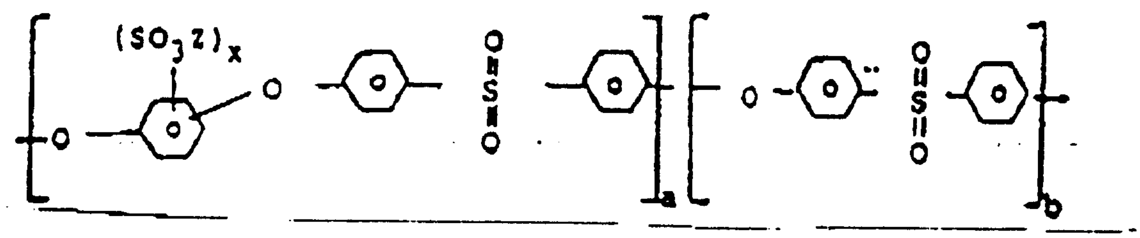

wobei Z Wasserstoff, ein Alkalimetall oder Stickstoff enthaltende Spezies sind, die von Ammoniak oder Aminen abgeleitet sind, das b/a-Verhältnis in einem Bereich von 0 bis 20 liegt und x eine solche mittlere Zahl ist, daß sich ein Ionenaustauschvermögen für das sulfonierte Polymer von zwischen 0,2 und 2,0 meq/g ergibt,

B) einem sulfonierten Polyarylethersulfon mit der Formel:

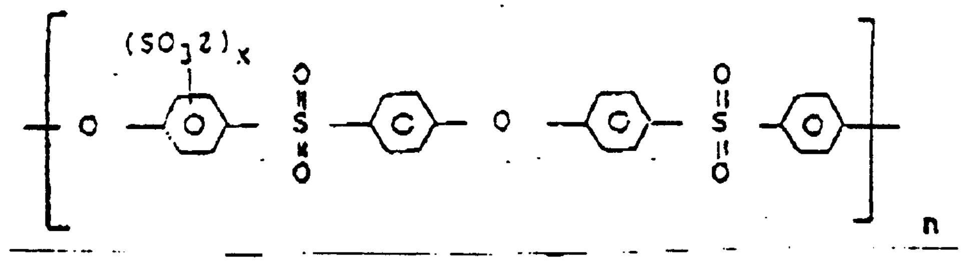

wobei Z Wasserstoff, ein Alkalimetall oder Stickstoff enthaltende Spezies sind, die von Ammoniak oder Aminen

abgeleitet sind, und x eine solche mittlere Zahl ist, daß sich ein Ionenaustauschvermögen für das sulfonierte Polyarylethersulfonpolymer von zwischen 0,2 und 2,0 meq/g ergibt, und

C) einem sulfonierten Polyaryletherketon mit der Formel:

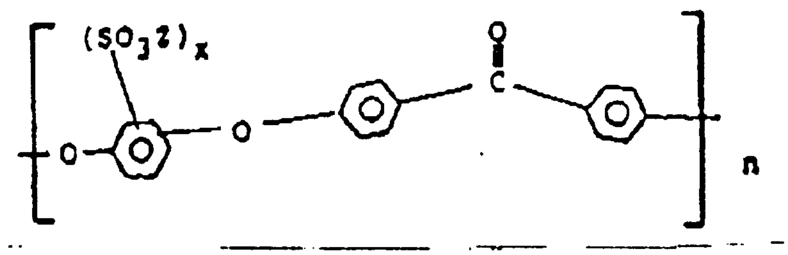

wobei Z Wasserstoff, ein Alkalimetall oder Stickstoff enthaltende Spezies sind, die von Ammoniak oder Aminen abgeleitet sind, und x eine solche mittlere Zahl ist, daß sich ein Ionenaustauschvermögen für das sulfonierte Polyaryletherketonpolymer von zwischen 0,2 und 2,0 meq/g ergibt.

**10.** Verfahren nach einem der vorhergehenden Ansprüche,
wobei das polymere Substrat eine anisotrope Membran ist, die ein Polysulfon oder ein Polyethersulfon aufweist.

**11.** Verfahren nach Anspruch 10,
wobei die sulfonierte Polyaryletherschicht ein Ionenaustauschvermögen zwischen 0,2 und 2,0 meq/g hat und wobei vorzugsweise das potenzierende Lösungsmittelsystem eine geringe Menge vorzugsweise an Lithiumsalz aufweist.

**Revendications**

**1.** Procédé pour réaliser une membrane composite d'osmose inverse comprenant un substrat de membrane polymérique poreux, ledit procédé comprend (a) de former une solution de polymère de polyarylether sulfonaté dans un système de solvant qui est polaire, volatile et de tension de surface suffisamment faible pour mouiller le substrat poreux, et bien qu'optionnellement capable de gonfler le substrat poreux, n'est pas capable de le dissoudre, (b) d'uniformément appliquer ladite solution du polyarylether sulfonaté à au moins une surface du substrat poreux, et (c) de retirer ledit solvant de ladite solution pour former un film du polyarylether sulfonaté fixé de manière adhérante au substrat poreux,
caractérisé en ce que le système de solvant comprend au moins 20 % à 100 % d'acide formique avec le reste qui est choisi à partir de :

(a) de l'eau et optionnellement des quantités mineures de sel de métal alcalin, et
(b) un solvant choisi à partir du groupe constitué du formamide, des alcools, des dioles et trioles d'alkylène et des éthers d'alkyle de glycol d'alkylène,
et en ce que la solution de polyarylether sulfonaté est appliquée dans une quantité dans le domaine de 10 - 100 mg de polymère par pied carré (0,1 à 1 g de polymère par $m^2$) de substrat.

**2.** Procédé selon la revendication 1, dans lequel le système de solvant comprend une quantité mineure de sel de lithium, préférablement à une quantité inférieure à 2,0 % en poids du système de solvant.

**3.** Procédé selon l'une quelconque des revendications précédentes, dans lequel ladite solution contient un polymère de polyarylether sulfonaté dans une quantité jusqu'à 0,75 % en poids par % de volume.

**4.** Procédé selon l'une quelconque des revendications précédentes, dans lequel l'étape (c) comprend une étape de séchage dans laquelle de l'air est passé à travers le revêtement à une température dans le domaine de 0 à 120°C.

**5.** Procédé selon la revendication 4, dans lequel ladite température est dans le domaine de 40 à 80°C.

**6.** Procédé selon l'une quelconque des revendications précédentes, dans lequel le substrat poreux est une membrane polymérique anisotropique comprenant un polymère choisi dans le groupe constitué des sulfones de polyarylether, des cétones de polyarylether, des ethers de polyphenylène, des thioethers de polyphenylene, des polyimides, des polyetherimides, des polybenzimidazoles, des polyesters, du fluorure de polyvinylidene, des polychloroethers, des polycarbonates, du polystyrene, des chlorures de polyvinyl, du polysulfone, du polyethersulfone et du polyacrylonitrile et des copolymères de ceux-ci, de préférence du sulfone de polyarylether.

**7.** Procédé selon l'une quelconque des revendications précédentes, dans lequel le substrat poreux comprend un polymère de polysulfone.

**8.** Procédé selon l'une quelconque des revendications précédentes, dans lequel le revêtement ou film de polyarylether sulfonaté a une capacité d'échange d'ion dans le domaine de 0,2 à 2,0 meq/g.

**9.** Procédé selon l'une quelconque des revendications précédentes, dans lequel le film polymérique comprend un composé choisi à partir de :

A) une sulfone de polyarylether sulfonaté ayant la formule

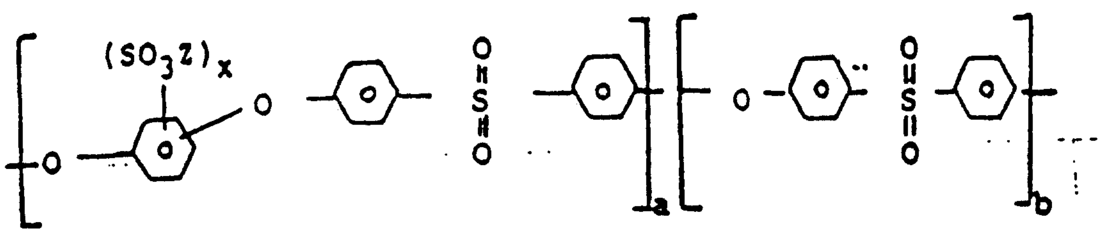

dans laquelle Z est l'hydrogène, un métal alcalin ou de l'azote contenant des espèces dérivées d'ammonia ou d'amine, le rapport b/a est de 0 à 20 et x est un nombre moyen de manière à donner une capacité d'échange d'ion pour le polymère de sulfone de polyarylether sulfonaté situé entre 0,2 et 2,0 meq/g,
B) une sulfone de polyarylether sulfonaté ayant la formule

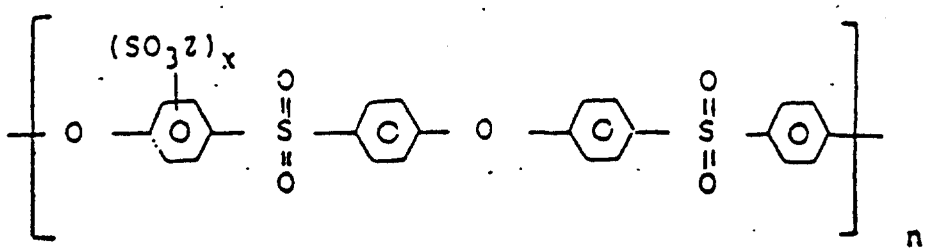

dans laquelle Z est l'hydrogène, un métal alkalin, ou de l'azote contenant des espèces dérivées d'ammoniac ou d'amines, et x est un nombre moyen de telle manière à donner une capacité d'échange d'ion pour le polymère de sulfone de polyarylether sulfonaté de 0,2 à 2,0 meq/g, et
C) une cétone de polyarylether sulfonaté ayant la formule

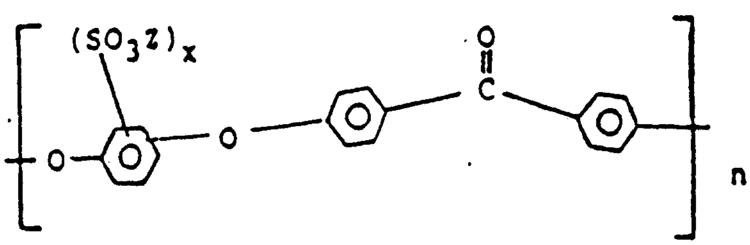

dans laquelle Z est l'hydrogène, un métal alkalin, ou de l'azote contenant des espèces dérivées d'ammoniac ou d'amines, et x est un nombre moyen de telle manière à donner une capacité d'échange d'ion pour le polymère de cétone de polyarylether sulfonaté de 0,2 à 2,0 meq/g.

10. Procédé selon l'une quelconque des revendications précédentes, dans lequel le substrat polymérique est une membrane anisotropique comprenant une polysulfone ou une polyether sulfone.

11. Procédé selon la revendication 10, dans lequel le film de polyarylether sulfonaté a une capacité d'échange d'ion située entre 0,2 et 2,0 meq/g et, de préférence dans lequel le système de solvant potentialisant comprend une quantité mineure de sel de lithium.